(19) Europäisches Patentamt
European Patent Office
Office européen des brevets

(11) EP 4 787 703 A1

(12) **EUROPEAN PATENT APPLICATION**

(43) Date of publication:
05.08.2026 Bulletin 2026/32

(21) Application number: 25155272.5

(22) Date of filing: 31.01.2025

(51) International Patent Classification (IPC):
$H02P\ 6/18^{(2016.01)}$    $F03D\ 17/00^{(2016.01)}$
$H02P\ 21/18^{(2016.01)}$

(52) Cooperative Patent Classification (CPC):
**H02P 21/18; F03D 17/025; F03D 17/036;
H02P 6/183;** F05B 2260/845; F05B 2270/327;
H02P 25/03; H02P 2101/15; H02P 2103/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Gamesa Renewable Energy
A/S**
**7330 Brande (DK)**

(72) Inventors:
• **Stachura, Julian**
  **Glasgow (GB)**
• **Freire, Nuno Miguel Amaral**
  **3150-109 Condeixa (PT)**

(74) Representative: **SGRE-Association
Siemens Energy Global GmbH& Co. KG
SE CD I IP Intellectual Property
Siemenspromenade 9
91058 Erlangen (DE)**

(54) **ROTOR POSITION DETERMINATION**

(57)    It is described a method of determining rotor position related information of an electrical machine (6), the method comprising: at a first rotor position, performing a HFI-method to obtain a first measurement signal set (16); at a second rotor position, performing a HFI-method to obtain a second measurement signal set (17); and deriving a corrected rotor position ($\theta\_real1$, $\theta\_real2$) and/or a rotor position error (err_6f) based on the first measurement signal set (16) and the second measurement signal set (17).

FIG 2

EP 4 787 703 A1

**Description**

Field of invention

The present invention relates to a method and a corresponding arrangement for determining rotor position related information of an electrical machine, in particular permanent magnet synchronous generator. Furthermore, the present invention relates to a method and a corresponding arrangement of determining a rotor position of an electrical machine. Furthermore, the present invention relates to a generator system and also relates to a wind turbine comprising the generator system.

Art Background

For controlling an electrical machine, knowledge of the rotor position may be required. The rotor position may for example be required to perform transformation and/or back transformation to and from a dq reference frame rotating synchronously with the rotor to a static reference frame.

For determining the rotor position, conventionally an encoder having an encoder wheel in contact with the rotating rotor may be utilized. The mechanical encoder needs to be initialized meaning that an initial rotor position angle or rotor position needs to be determined, since conventionally, the encoder only measures increments of the rotor position but is not capable of measuring the absolute rotor position. For initialization of the encoder, conventionally, alternative rotor position determination methods have been utilized. One such procedure involves high frequency injection of a voltage to the electrical machine which is referred as HFI-methodology or method.

It has, however, been observed that also determination of the rotor position using HFI-procedures not in all circumstances or operational conditions provides reliable or accurate positional data.

Thus, there may be a need for a method of determining rotor position related information of an electrical machine and there may be a need for a corresponding arrangement of determining rotor position related information of an electrical machine. Furthermore, there may be a need for a method and a corresponding arrangement of determining rotor position of an electrical machine, wherein reliability and/or accuracy of the rotor position is improved. Furthermore, there may be a need for a generator system and a wind turbine which may make use of an improved determination of rotor position for appropriate control therefore increasing or improving performance.

Summary of the Invention

This need may be met by the subject matter according to the independent claims. Advantageous embodiments of the present invention are described by the dependent claims.

According to an embodiment of the present invention it is provided a method of determining rotor position related information of an electrical machine, the method comprising: at a first rotor position, performing a HFI-method to obtain a first measurement signal set; at a second rotor position, performing a HFI-method to obtain a second measurement signal set; and deriving a corrected rotor position and/or a rotor position error based on the first measurement signal set and the second measurement signal set.

The method may be implemented in software and/or hardware and may for example be performed by an arrangement according to an embodiment of the present invention which is described below. The method and/or the arrangement may be part of controller procedures or may be performed for example also by a module included in a controller of a generator system, in particular a controller of a wind turbine.

The rotor position may for example be specified or defined by an angle. The rotor position in particular may relate to or represent or be an electrical rotor position (e.g. Theta_elec) which is related to a mechanical rotor position (e.g. Theta_mech) and which is or may be in particular proportional to a mechanical rotor position. A proportional factor may depend on the number of pole pairs, for example;

$$\text{Theta\_elec = p * Theta\_mech / GR,}$$

Where p stands for the number of pole pair, and GR for the gear ratio between encoder and rotor wheels (optional depending on the encoder setup).

At the first rotor position as well as at the second rotor position, the HFI-method is performed. The HFI-method may involve to inject a high frequency voltage to stator windings of the electrical machine and to measure resulting stator winding currents. From the stator winding currents (representing for example the respective measurement signal set), a respective HFI-derived first/second rotor position may be determined. Those first/second HFI-derived rotor positions may be erroneous, for example due to a disturbing harmonic or disturbing oscillation of the stator currents. However, when the respective stator currents or in general the first measurement signal set and the second measurement signal set are measured at a first/second rotor position, the respective error or disturbance effects may be derived or compensated for in order to for example derive a corrected first HFI-derived rotor position and/or a second corrected HFI-derived rotor position and/or rotor position error. Later on, this first and/or second corrected HFI-derived rotor position and/or rotor position error may for example be utilized for initializing an incremental encoder.

In other embodiments, the corrected HFI-derived rotor position(s) may be utilized for general control of the electrical machine. In particular, a corrected rotor position and/or a rotor position error may be derived based on the HFI-derived first rotor position and the HFI-derived second rotor position (which both may be erroneous). By considering both the (erroneous) first HFI-derived rotor position and the (erroneous) second HFI-derived rotor position, a correct rotor position or a rotor position error is derivable.

In particular, a sum of the first HFI-derived rotor position and the second HFI-derived rotor position may be formed and the electrical position difference between the first rotor position and the second rotor position may be subtracted from the sum and the result may be divided by 2 in order to for example derive a corrected first HFI-derived rotor position. Alternatively or additionally, a rotor position error may be calculated as a difference between the second HFI-derived rotor position and the first HFI-derived rotor position from which the electrical positional difference between the first rotor position and the second rotor position is subtracted and the result may be divided by 2. The error derived as described may correspond to the error of the first HFI-derived rotor position. The error of the second HFI-derived rotor position may be the negative of the error of the first HFI-derived rotor position. This derivation takes advantage of assumed symmetry properties of the error, when the error originates from a particular harmonic distortion. Errors at two rotor positions having a difference of half a period (plus an arbitrary multiple of harmonic period) of the harmonic are assumed to have same magnitude but different sign.

Embodiments of the present invention may address a problem during initialization for example of an incremental encoder which may be initialized using an HFI-derived rotor angle or rotor position. It has been observed that conventionally, an error resulting from a 6f component in the electro-magnetic characteristics in the generator is present. The 6f component may relate to the sixth harmonic of a fundamental frequency of the electrical machine.

The fundamental frequency f may be given by:

$$f = n * p /60$$

where n is the speed in rpm, and p the number of pole pairs.

Conventionally, an error in the initialization of the encoder angle may have resulted in a constant error which might have carried over to the misalignment of the estimated dq-reference frame relative to the real dq-frame. Conventionally, this had consequences in the form of injecting current off-axis, leading conventionally to higher power consumption and reduced torque which are critical in particular operational modes. Thus, embodiments of the present invention may improve performance of the electrical machine, in particular including lower power consumption and/or increased torque.

The method may also include to turn or rotate the rotor of the electrical machine to the first rotor position and then after taking the first measurement signal set to rotate or turn the rotor to the second rotor position. Turning or rotating the rotor may be done by exerting a torque which is generated by the electrical machine itself.

There may be several ways to move the rotor:

1. Use aerodynamic torque from wind together with changes of blade pitch and nacelle yaw - the most manual procedure.
2. Generate torque (by generator) in open-loop via setting a current reference Iq* in dq-coordinate frame.
3. Generate torque in closed-loop via a high performance position controller (outputs Iq*) together with an encoder.

The first and/or the second rotor position may be associated with one or more particular mechanical or structural features or markings on the stator and/or on the rotor of the electrical machine.

According to an embodiment of the present invention, the method further comprises evaluating the first measurement signal set to derive a first HFI-derived rotor position; evaluating the second measurement signal set to derive a second HFI-derived rotor position; deriving the corrected rotor position and/or the rotor position error based on the first HFI-derived rotor position and the second HFI-derived rotor position.

The first and/or the second HFI-derived rotor position may both be derived by a conventional method which may include to measure stator currents in response to injection of the respective high frequency signal. In particular, a pulsating carrier signal may be injected and may be combined with a method for polarity detection. Thereby, the high frequency injection (HFI) may be a technique that can be used for sensorless position control at standstill and low speeds (or also high speeds). The HFI-methodology may consider principles of amplitude modulation, exploiting the saliency property of the machine. The HFI-method may involve to inject a d-axis high frequency voltage (e.g. a voltage reference having non-zero d-component) (for example between 200 and 800 Hz, e.g. a fraction of the converter switching frequency), e.g. injected by appropriate equipment (for example an arrangement as defined and described below) and/or by a generator converter on the machine terminals (in particular stator windings). The resulting demodulated HF q-axis generator current (e.g. Iq_hf_demod), which is or may be related to the machine saliency, may be used to extract the rotor position information. Iq_hf_demod may be proportional to the position error.

The technique may exploit the fact that a non-zero amplitude of the demodulated q-axis generator current is associated with a non-zero error in the estimation of the rotor angle neglecting cross-saturation.

The HFI-method or procedure may employ a PI regulator or controller to eliminate such rotor position estimation error thereby driving the value of the demodulated high frequency q-axis generator current to zero. The method or the corresponding arrangement may comprise several method components such as a bandpass filter, a demodulation portion, polarity detection portion, controller portion, in particular PI controller which are connected to each other in order to derive a HFI-derived rotor position. As mentioned above, the first and also the second HFI-derived rotor position may be erroneous. However, by considering both those first and second HFI-derived rotor positions, a rotor position error or a corrected rotor position may be derived.

According to an embodiment of the present invention, the first rotor position and the second rotor position are predefined positions having an electrical rotor position difference of predefined amount.

The position difference may be selected or defined depending on the harmonic distortion to be compensated or corrected for. Embodiments of the present invention may for example enable compensation of rotor position errors due to particular harmonic(s) of the fundamental frequency for example a second, , fourth, , sixth, twelfth harmonic or a harmonic number between 2 and 20, for example. Thereby, errors due to different oscillation frequencies may be compensated or corrected or determined, if a single harmonic dominates.

According to an embodiment of the present invention, the first rotor position and the second rotor position are predefined in order to enable correction of the rotor position due to at least one predefined harmonic disturbance, in particular 6f disturbance.

The 6f disturbance has been observed to be in particular cumbersome and thus correction of error position erroneous position determination may be particularly advantageous for the 6f disturbance.

According to an embodiment of the present invention, the first rotor position and the second rotor position are by $\Delta = 180°/h + n * 360°/h = 180°/h * (1 + 2° * n)$, in particular $30° + n * 60°$, electrical degrees apart from each other, wherein n is an integer, wherein h (being an integer) is the disturbing harmonic to be corrected for.

Thereby, the electrical angle difference between the first rotor position and the second rotor position may be derived for different harmonic distortions to be compensated for or to be taken into account.

According to an embodiment of the present invention, the first rotor position and the second rotor position correspond to two mechanical positions associated with two structural features or markings, in particular a first edge and a second edge of a lock pin hole at the rotor and/or at a stator.

For locking the rotor relative to the stator, at the stator or at the rotor, one or more locking pin holes may be provided. Furthermore, respective locking pins may be provided and may be inserted through the respective locking pin holes (in particular through-holes) into seats at the stator or the rotor. The locking pin holes may slightly be wider or larger than the extent of the locking pins such that the rotor still may slightly move or movable even if a locking pin is inserted into a locking hole and a respective pin seat. The rotor may still move (also in this "locked" condition) for example such that for example at the first rotor position the locking pin touches a first circumferential edge of the locking pin hole and when in the second rotor position, the locking pin approaches or even touches or contacts a second circumferential edge of the locking pin hole. The locking pin hole may have a known width between the respective circumferential edges. For example, the combination of the locking pin and the locking pin hole may be designed such that when the locking pin contacts a first circumferential edge of the locking pin hole, the first position is reached and when the locking pin contacts a second circumferential edge of the locking pin hole, a second rotor position is reached, wherein a difference the first and second rotor position has the predetermined amount. Thus, rotating or positioning the rotor to the first/second rotor position may be simplified.

According to an embodiment of the present invention, at the first rotor position and/or the second rotor position a HFI-method is performed during standstill of the rotor, in particular while locking and/or a brake is applied to the rotor. The HFI-method may have the advantage that it can also be performed for rotor position determination during standstill.

According to an embodiment of the present invention, performing the HFI-method includes, at the first and/or second rotor position, respectively: applying a high frequency voltage reference having higher frequency than a fundamental frequency to stator windings of the machine, in particular to a converter connected to the stator windings; measuring stator winding currents as the first measurement signal set and the second measurement signal set, respectively.

The electrical machine may comprise or may be connected to a converter, in particular DC/AC converter, which may also refer to as a generator side converter portion. The wind turbine may further comprise a grid side converter portion, which is coupled via a DC link to the generator side converter portion. The high frequency voltage reference may for example be supplied to the generator side converter portion which is also connected to the stator windings of the electrical machine, in particular generator. In response to the high frequency voltage reference, HF currents (carried in the stator windings) may result which may then be measured as first measurement signal set and second measurement signal set, respectively. Thereby, conventional HFI-methodology may be employed.

According to an embodiment of the present invention, the method further comprises at least one of the following: rotating the rotor to the first rotor position; rotating the rotor to the second rotor position; generating a torque for rotating the rotor using the electrical machine; generating a torque for holding the rotor at standstill using the electrical machine (in some cases avoided, because it requires Iq to be different from zero, thus changing the position error) or a mechanical brake.

Thereby, several opportunities how to carry out or reach the respective rotor positions may be enabled or provided.

According to an embodiment of the present invention, the electrical machine includes a permanent magnetic synchronous generator, in particular of a wind turbine; and/or wherein at the rotor plural rotor blades are mounted or mountable.

In particular, thereby, the method may also be suitable to be performed by a wind turbine system.

According to an embodiment of the present invention it is provided a method of determining rotor position of an electrical machine, the method comprising: performing a method of determining rotor position related information of the electrical machine according to any one of the preceding embodiments; using an encoder, in particular during rotating the rotor, to derive an encoder derived rotor position; initializing or calibrating or correcting the encoder derived rotor position using the rotor position related information.

The encoder may be an incremental mechanical encoder comprising an encoder wheel which may be mounted at the stator and which may rotate due to friction of the encoder wheel outer surface rolling or contacting the rotor. In other embodiments, the encoder does not need to be initiated but the determined corrected rotor position or the rotor position error may be utilized for correcting other HFI-derived rotor position values.

It should be understood, that features, individually or in any combination, disclosed, described, provided or explained with respect to a method for determining rotor position related information may also be, individually or in any combination, applied or provided for an arrangement for determining rotor position related information according to embodiments of the present invention and vice versa.

According to an embodiment of the present invention it is provided an arrangement for determining rotor position related information of an electrical machine, the arrangement comprising: a signal generator adapted to generate HFI-signals and to apply the HFI-signals, in particular as at least a portion of a voltage reference, to the machine at a first rotor position and a second rotor position, respectively; a processor adapted: to receive a first measurement signal set of stator windings of the machine in response to applying the HFI-signals to the machine at the first rotor position; to receive a second measurement signal set of stator windings of the machine in response to applying the HFI-signals to the machine at the second rotor position; to derive a corrected rotor position and/or a rotor position error based on the first measurement signals and the second measurement signals.

The arrangement may be configured to carry out a method for determining rotor position related information according to an embodiment as explained above or below.

According to an embodiment of the present invention it is provided a generator system, comprising: an electrical machine having rotor and stator with stator windings; a control portion connected to the electrical machine for controlling the machine, an arrangement according to the preceding embodiment electrically connected to the control portion; the control portion using the rotor position related information for controlling the machine; in particular an incremental encoder.

The arrangement and the controller portion may be respective portions of a controller, for example a wind turbine controller. The generator system may further optionally also comprise a mechanical incremental encoder which may be initialized by the corrected rotor position.

According to an embodiment it is provided a wind turbine, comprising: a generator system according to the preceding embodiment; a hub at which plural rotor blades are mountable of mounted, the hub being coupled to the rotor of the generator system.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention comprising an arrangement for determining rotor position related information of an electrical machine and also comprising a generator system according to an embodiment of the present invention;

Fig. 2 illustrates curves considered in embodiments of the present invention.

Detailed Description

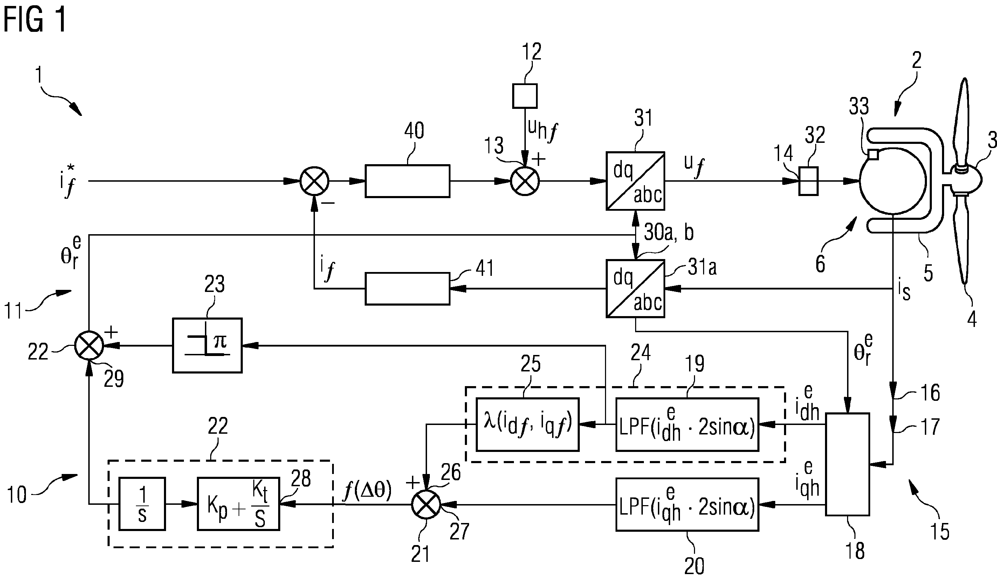

The wind turbine 1 schematically illustrated in Fig. 1 comprises a generator system 2 according to an embodiment of the present invention. The wind turbine 1 further comprises a hub 3 at which plural rotor blades 4 are mountable or mounted. The hub 3 is coupled to a rotor 5 (of an electrical machine 6) of the generator system 2. The generator system 2 comprises an electrical machine 6 having a rotor 5 and a stator 7 with stator windings (not in detail illustrated). The electrical machine 6 is coupled to a converter 32 which may be included in the generator system 2. The electrical machine 6 comprises an incremental encoder 33 (e.g. installed at stator 7 and in contact with and rolling at the rotor 5) which may be initialized according to embodiments of the present invention.

The generator system 2 further comprises an arrangement 10 for determining rotor position related information according to an embodiment of the present invention which is electrically connected to a control portion 11. The control portion 11 is also comprised in the generator system 2 and is connected to the electrical machine 6 and/or converter 32.

The arrangement 10 comprises a signal generator 12 which is adapted to generate HFI-signals 13 and to apply the HFI-signals in particular as a portion of a voltage reference 14 to the electrical machine 6 or (converter 32 of) the generator system 2 at a first rotor position and a second rotor position, respectively. The first and the second rotor positions may be adopted subsequently and then the rotor may be respectively fixed at the first and the second rotor positions, respectively.

The control portion 11 comprises a current regulator 40 receiving a current reference i_f* diminished by actual current i_f and outputting a voltage reference in dq frame which is transformed into a abc-frame by transformation module 31. Module 40 output is summed with the HF voltage signal 13 to result in voltage reference 14 after transformation from dq to abc frame.

Stator current i_s is transformed using module 31a into dq-frame (and optionally provided to low pass filter 41) to result in i_f. i_f is subtracted from reference current i_f* and the current error is supplied to current regulator 40.

The arrangement 10 further comprises a processor 15 (comprising one or more processor portions) which is adapted to receive a first measurement signal set 16 of stator windings of the electrical machine 6 in response to applying the HFI-signals 13 (or reference 14) to the electrical machine 6 or the generator system 2 at the first rotor position. The processor 15 is further adapted to receive a second measurement signal set 17 of the stator windings of the electrical machine 6 or the generator system 2 in response to applying the HFI-signals 13 (or reference 14) (in particular later in time than when the signals 13 were applied when the rotor was in the first rotor position) to the electrical machine 6 or the generator system 2 at the second rotor position.

The processor 15 is further configured to derive a corrected rotor position and/or a rotor position error based on the first measurement signals 16 and the second measurement signals 17.

In the illustrated embodiment, the processor 15 comprises plural processor modules, for example a bandpass filter 18, demodulation portions 19, 20, addition elements 21, 22 and also a controller 22 which acts as a position observer as well as a polarity detection module 23.

The HFI method may be implemented differently than shown in Fig. 1. E.g. blocks 23, 24, 22, 21, 20, 18 may be replaced by a more generic HFI-block. The invention is not restricted to the particular implementation of HFI-method as shown in Fig. 1.

The first/second measurement signal set 16, 17 is formed by stator current measurement signals of the electrical machine 6. The signals are bandpass filtered by the bandpass filter 18 and demodulated by the modules 19, 20 into respective d and q signal portions. Module 24 comprises the demodulation module 19 as well as a function module 25 and outputs a cross-saturation compensation signal 26. The addition element 21 sums the demodulated q-component of the HF current 27 with the signal 26 and the resulting signal 28 is supplied to the controller portion 22 which acts as a position observer. The position observer 22 outputs an preliminary estimated rotor position 29 which is added to the output of the polarity detection module 23 to result in an estimated rotor position 30. The estimated rotor position 30 enters all transformation modules 31 which transform between a dq-synchronous rotating frame and a fixed abc reference frame.

When the HFI-method is performed while the rotor is in the first rotor position, the estimated (HFI-derived) (first) rotor position is labelled with reference sign 30a and when the HFI-method is performed while the rotor is in the second rotor position, the estimated HFI-derived (second) rotor position is labelled with reference sign 30b. Thus, the arrangement is configured to evaluate the first measurement signal set 16 to derive a first HFI-derived rotor position 30a and is also configured to evaluate the second measurement signal set 17 to derive a second HFI-derived rotor position 30b. The arrangement is then further configured to derive a corrected rotor position and/or rotor position error based on the first HFI-derived rotor position 30a and the second HFI-derived rotor position 30b. The first rotor position and the second rotor position have electrical rotor position difference of predefined amount.

Exemplary, a determination of the rotor position error or corrected rotor position in case of a 6f disturbance is described below.

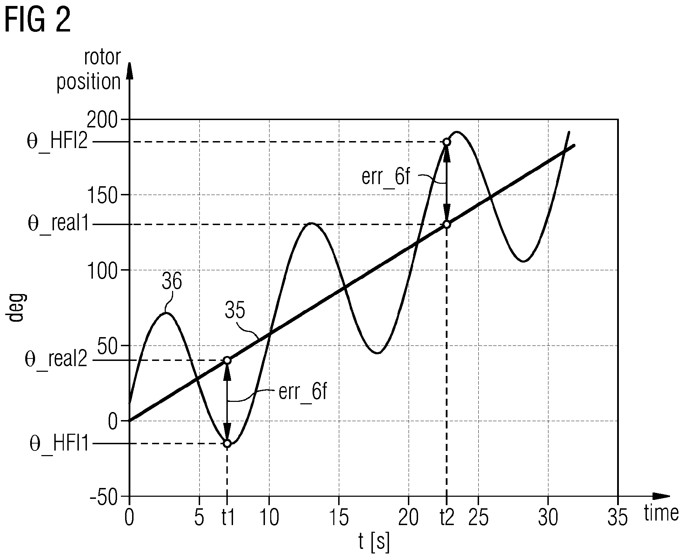

**Fig. 2** illustrates curves relating to considerations of embodiments of the present invention. The abscissa of the coordinate system of Fig. 2 represents the time while the ordinate represents electrical degrees. The curve 35 represents the real or correct rotor position angle while the curve 36 represents HFI-derived rotor positions, such as rotor positions 30a or 30b which are also referred to as Θ_HFI1, Θ_HFI2, respectively. At a first point in time t1, the rotor is at the first rotor position and a second point in time t2, the rotor is at a second rotor position. At those two portions, the first HFI-derived and second HFI-derived rotor positions Θ_HFI1 and Θ_HFI2 are determined, for example by the arrangement 10 illustrated in Fig. 1. As can be seen in Fig. 2, the HFI-derived rotor positions Θ_HFI1, Θ_HFI2 are offset by an amount err_6f from the real rotor positions Θ_real1, Θ_real2, respectively. The rotor position error and/or the real rotor positions may be derived according to embodiments of the present invention.

By taking advantage of the known size of a lock pin hole (or another mechanical feature of the generator if available) it is possible to devise a procedure that determines the 6f error.

The problematic 6f has a period of 60 electrical degrees and it is sinusoidal. If two measurement are taken at 30deg + n*60deg, where n=0,1,2,.., the error err_6f in measured positions should be equal and opposite (due to the 180deg phase shift in 6f), as seen in Fig 2. The following equations describe the two erroneous measured positions Θ_HFI1, Θ_HFI2 as well as corrected position Θ_real1 and the position error err_6f:

$$\theta_{HFI_1} = \theta_{real_1} + err_{6f}$$

$$\theta_{HFI_2} = \theta_{real_1} + 30^{\circ} + n * 60\,\mathrm{deg} - err_{6f}$$

$$\theta_{real_1} = \frac{\left(\theta_{HFI_1} + \theta_{HFI_2} - (30 + n * 60\,\mathrm{deg})\right)}{2}$$

$$err_{6f} = \frac{\left(\theta_{HFI_2} - \theta_{HFI_1} - 30deg\right)}{2}$$

If the nominal difference between the positions (i.e. first and second rotor postion) of the measurements is known, then they can be used to remove the error and initialize more precisely. Given that a lock pin hole allows for a 30deg electrical movement, it is possible to initialize at the two edges of the hole and check the angles to then find the correction factor.

The procedure could comprise at least one or the following steps:

- Initialize HFI at one edge of the hole
- Record the angle as $\theta_{HFE_1}$.
- Move to the other edge of the hole which is +30deg away electrically
- Initialize HFI at the new edge
- Record the angle as $\theta_{HFI_2}$
- Calculate the expected 6f error as

$$err_{6f} = \frac{\left(\theta_{HFI_2} - \theta_{HFI_1} - 30deg\right)}{2}$$

- Now when initializing at the same edge, apply -$err_{6f}$ correction factor to the encoder angle.

Embodiments of the present invention also provide a method of controlling or a controller for controlling a generator system. The method or the control portion may utilize the rotor position error or the corrected HFI-derived rotor position, for controlling the machine, in particular employing initialization of a mechanical incremental encoder. Within the controller, a harmonic compensation module may be included which may for example utilize the detected or determined rotor position error.

EP 4 787 703 A1

Embodiments of the present invention may also enable to determine the rotor position error for more than two rotor positions, such that for example the amplitude and/or the phase of the disturbing curve 36 may be determined and corrected for. Embodiments of the present invention may address and/or compensate or correct for disturbances for one harmonic order.

Concerning making the method generic for other harmonic orders it is noted the following:

(1) It may be easy to achieve if there is a dominant harmonic and all others can be neglected, examples of required movement between test position:

a. 6f: 180°/6 = 30°
b. 12f: 180°/12 = 15°
c. 2f: 180°/2 = 90°

(2) However, discriminating contributions when harmonics are superimposed is apparently unfeasible.
(3) In some cases, the proposed method is insensitive to other harmonic order. For instance, the originally suggested method for 6f is insensitive to 12f error (error cancels out in given equation).

Embodiments of the present invention may take advantage of tight manufacturing tolerances on mechanical parts of the system to improve the precision of the control system. Results may include to provide a more accurate control reference frame (dq-frame) hence improving system efficiency and capabilities.
It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining rotor position related information of an electrical machine (6), the method comprising:

   at a first rotor position, performing a HFI-method to obtain a first measurement signal set (16);
   at a second rotor position, performing a HFI-method to obtain a second measurement signal set (17); and
   deriving a corrected rotor position ($\theta\_real1$, $\theta\_real2$) and/or a rotor position error (err_6f) based on the first measurement signal set (16) and the second measurement signal set (17).

2. Method according to the preceding claim, further comprising:

   evaluating the first measurement signal set (16) to derive a first HFI-derived rotor position ($\theta\_HFI1$, 30a);
   evaluating the second measurement signal set (17) to derive a second HFI-derived rotor position ($\theta\_HFI1$, 30b);
   deriving the corrected rotor position ($\theta\_real1$, $\theta\_real2$) and/or the rotor position error (err_6f) based on the first HFI-derived rotor position and the second HFI-derived rotor position.

3. Method according to any one of the preceding claims, wherein the first rotor position and the second rotor position are predefined positions having an electrical rotor position difference ($\Delta$) of predefined amount.

4. Method according to any one of the preceding claims, wherein the first rotor position and the second rotor position are predefined in order to enable correction of the rotor position due to at least one predefined harmonic disturbance, in particular 6f disturbance.

5. Method according to any one of the preceding claims, wherein the first rotor position and the second rotor position are by $\Delta = 180°/h + n * 360°/h = 180°/h * (1 + 2° * n)$, in particular $30° + n * 60°$, electrical degrees apart from each other, wherein n is an integer, wherein h is the disturbing harmonic to be corrected for.

6. Method according to any one of the preceding claims, wherein the first rotor position and the second rotor position correspond to two mechanical positions associated with two structural features or markings, in particular a first edge and a second edge of a lock pin hole at the rotor (5) and/or at a stator (7).

7. Method according to any one of the preceding claims, wherein at the first rotor position and/or the second rotor position a HFI-method is performed during standstill of the rotor (5), in particular while locking and/or a brake is applied to the

8

rotor (5).

8. Method according to any one of the preceding claims, wherein performing the HFI-method includes, at the first and/or second rotor position, respectively:

applying a high frequency voltage reference (13, 14) having higher frequency than a fundamental frequency to stator windings of the machine, in particular to a converter (32) connected to the stator windings;
measuring stator winding currents as the first measurement signal set (16) and the second measurement signal set (17), respectively.

9. Method according to any one of the preceding claims, further comprising at least one of the following:

rotating the rotor (5) to the first rotor position;
rotating the rotor (5) to the second rotor position;
generating a torque for rotating the rotor (5) using the electrical machine;
generating a torque and/or applying a mechanical brake for holding the rotor (5) at standstill using the electrical machine.

10. Method according to any one of the preceding claims,

wherein the electrical machine (6) includes a permanent magnetic synchronous generator, in particular of a wind turbine; and/or
wherein at the rotor (5) or a hub (3) plural rotor blades (4) are mounted or mountable.

11. Method of determining rotor position of an electrical machine (6, 2), the method comprising:

performing a method of determining rotor position related information of the electrical machine (6, 2) according to any one of the preceding claims;
using an encoder (33), in particular during rotating the rotor, to derive an encoder derived rotor position;
initializing or calibrating or correcting the encoder derived rotor position using the rotor position related information.

12. Arrangement (10) for determining rotor position related information of an electrical machine, the arrangement comprising:

a signal generator (12) adapted to generate HFI-signals (13) and to apply the HFI-signals, in particular as at least a portion of a voltage reference (14), to the machine (2) or a converter (33) at a first rotor position and a second rotor position, respectively;
a processor (15) adapted:

to receive a first measurement signal set (16) of stator windings of the machine in response to applying the HFI-signals (13, 14) to the machine at the first rotor position;
to receive a second measurement signal set (17) of stator windings of the machine in response to applying the HFI-signals (13, 14) to the machine at the second rotor position;
to derive a corrected rotor position ($\theta\_real1$, $\theta\_real2$) and/or a rotor position error (err\_6f) based on the first measurement signals (16) and the second measurement signals (17).

13. Generator system (2), comprising:

an electrical machine (6) having rotor (5) and stator (7) with stator windings;
a control portion (11) connected to the electrical machine (6, 2) or a converter (32) for controlling the machine,
an arrangement (10) according to the preceding claim electrically connected to the control portion (11);

the control portion (11) using the rotor position related information for controlling the machine;
in particular an incremental encoder (33).

14. Wind turbine (1), comprising:

a generator system (2) according to the preceding claim;

a hub (3) at which plural rotor blades (4) are mountable of mounted, the hub being coupled to the rotor (5) of the generator system (2).

FIG 1

# FIG 2

Europäisches
Patentamt

European
Patent Office

Office européen
des brevets

# EUROPEAN SEARCH REPORT

**Application Number**

EP 25 15 5272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/201200 A1 (HACHIYA YOSUKE [JP] ET AL) 13 July 2017 (2017-07-13) * the whole document * ----- | 1-14 | INV. H02P6/18 F03D17/00 H02P21/18 |
| A | EP 4 498 595 A1 (SIEMENS GAMESA RENEWABLE ENERGY AS [DK]) 29 January 2025 (2025-01-29) * the whole document * ----- | 1-14 | |
| A | EP 4 216 423 A1 (SIEMENS GAMESA RENEWABLE ENERGY AS [DK]) 26 July 2023 (2023-07-26) * the whole document * ----- | 1-14 | |

**TECHNICAL FIELDS SEARCHED (IPC)**

H02P
F03D

The present search report has been drawn up for all claims

| Place of search | Date of completion of the search | Examiner |
|---|---|---|
| Munich | 16 June 2025 | Wimböck, Thomas |

EPO FORM 1503 03.82 (P04C01)

## ANNEX TO THE EUROPEAN SEARCH REPORT
## ON EUROPEAN PATENT APPLICATION NO.

EP 25 15 5272

This annex lists the patent family members relating to the patent documents cited in  the above-mentioned European search report.
The members are as contained in the European Patent Office EDP file on
The European Patent Office is in no way liable for these particulars which are merely given for the purpose of information.

16-06-2025

| Patent document cited in search report | | Publication date | Patent family member(s) | | Publication date |
|---|---|---|---|---|---|
| US 2017201200 | A1 | 13-07-2017 | CN | 107078673 A | 18-08-2017 |
| | | | JP | 5893232 B1 | 23-03-2016 |
| | | | JP | WO2016038992 A1 | 27-04-2017 |
| | | | TW | 201618450 A | 16-05-2016 |
| | | | US | 2017201200 A1 | 13-07-2017 |
| | | | WO | 2016038992 A1 | 17-03-2016 |
| EP 4498595 | A1 | 29-01-2025 | EP | 4498595 A1 | 29-01-2025 |
| | | | WO | 2025021458 A1 | 30-01-2025 |
| EP 4216423 | A1 | 26-07-2023 | CN | 118614004 A | 06-09-2024 |
| | | | EP | 4216423 A1 | 26-07-2023 |
| | | | EP | 4441882 A1 | 09-10-2024 |
| | | | US | 2025105766 A1 | 27-03-2025 |
| | | | WO | 2023143848 A1 | 03-08-2023 |

EPO FORM P0459

For more details about this annex : see Official Journal of the European Patent Office, No. 12/82